# FASCICULE DE BREVET EUROPEEN

(11) **EP 3 673 501 B1**
(45) Date de publication et mention de la délivrance du brevet: **25.06.2025**
(21) Numéro de dépôt: 18768928.6
(22) Date de dépôt: 20.08.2018
(51) Int. Cl.: H01G 11/62, H01G 11/64, H01G 11/00, H01G 11/06, H01G 11/34, H01G 11/58, H01G 11/60

(54) **SUPERCONDENSATEUR COMPRENANT UNE COMPOSITION ÉLECTROLYTIQUE COMPRENANT UN ADDITIF DE LA FAMILLE DES PHOSPHAZÈNES FLUORÉS**
SUPERKONDENSATOR DER EINE ELEKTROLYTISCHEZUSAMMENSETZUNG ENTHÄLT, DIE EIN ADDITVE AUS FLUORIERTE PHOSPHAZENE
SUPERCAPACITOR COMPRISING AN ELECTROLYTIC COMPOSITION WHICH COMPRISES AN ADDITIVE FROM THE FLUORINATED PHOSPHAZENE FAMILLY

(30) Priorité: 22.08.2017 FR 1757786
(43) Date de publication de la demande: 01.07.2020
(73) Titulaire: Commissariat à l'Energie Atomique et aux Energies Alternatives, 75015 Paris (FR)
(72) Inventeur: LE DIGABEL, Matthieu, 37260 Monts (FR); BILLER, Agnès, 37550 Saint Avertin (FR); PENOT, Nelly, 37260 Monts (FR)
(74) Mandataire: Brevalex
(86) Numéro de dépôt international: PCT/FR2018/052077
(87) Numéro de publication internationale: WO 2019/038499

(56) Documents cités:
- EP-A1- 1 577 913
- EP-A2- 2 660 920
- WO-A1-2017/069058
- JP-A- 2007 311 553
- JP-A- 2009 054 884

## Description

### DOMAINE TECHNIQUE

La présente invention a trait à des supercondensateurs comprenant des compositions électrolytiques résultant de l'association originale entre un additif de la famille des phosphazènes et un type de solvant organique spécifique utilisables, ces compositions permettant une amélioration de la capacité de tels dispositifs même après un très grand nombre de cycles de charge-décharge.

La présente invention a trait également à de nouvelles compositions électrolytiques pouvant entrer dans la constitution de ces électrolytes.

### ÉTAT DE LA TECHNIQUE ANTÉRIEURE

Il existe trois grands types de dispositifs à stockage d'énergie permettant de stocker réversiblement l'énergie électrique : les condensateurs diélectriques classiques, les accumulateurs ou générateurs électrochimiques secondaires et les supercondensateurs.

D'un point de vue du fonctionnement, les supercondensateurs fonctionnent sur le principe de la double couche électrochimique d'où l'appellation anglo-saxonne parfois rencontrée de « Electrochemical double layer capacitor » (connue également sous l'abréviation EDLC), soit en d'autres termes sur le principe de stockage d'énergie par distribution des ions provenant d'un électrolyte au voisinage de la surface de deux électrodes poreuses imprégnées d'électrolyte, séparées par une membrane isolante et poreuse assurant la conduction ionique.

Ainsi, une cellule de base d'un supercondensateur peut se résumer aux éléments suivants :
- une électrode positive ;
- une interface électrode positive/électrolyte formant une double couche électrique ;
- une membrane isolante et poreuse imprégnée par ledit électrolyte ;
- une électrode négative ; et
- une interface électrode négative/électrolyte formant une double couche électrique.

Du fait de l'existence de ces deux interfaces formant chacune une double couche électrochimique, un supercondensateur peut être considéré schématiquement comme l'association en série de deux condensateurs, l'un à l'électrode positive et l'autre à l'électrode négative, ces deux condensateurs étant créés par application d'un courant aux bornes du supercondensateur, ce qui crée une zone de charges aux deux interfaces électrode-électrolyte, l'énergie étant ainsi stockée de façon électrostatique et non électrochimique.

Sachant que l'énergie stockée et la puissance délivrée par un supercondensateur sont fonction du carré de la tension nominale applicable, il s'entend donc que les performances d'un supercondensateur peuvent être grandement améliorées en jouant sur l'augmentation de la tension nominale applicable aux bornes du supercondensateur avec la contrainte de trouver un électrolyte adapté à la différence de potentiel maximale existant aux bornes du supercondensateur (en d'autres termes, l'électrolyte doit rester stable dans la fenêtre électrochimique offerte par le supercondensateur) tout en présentant les caractéristiques attendues pour un électrolyte, à savoir :
- une bonne conductivité ionique ;
- une plage de température élevée ; et
- une viscosité relativement faible de sorte à permettre une bonne mobilité des ions.

Actuellement, deux types d'électrolytes sont majoritairement utilisés dans les supercondensateurs :
- les électrolytes aqueux, consistant en un ou des sels dissous dans l'eau ; et
- les électrolytes organiques, consistant en un ou des sels dissous dans un solvant organique.

Concernant les électrolytes aqueux, qu'ils soient acides (par exemple, une solution d'acide sulfurique) ou basiques (par exemple, une solution de potasse), le domaine de tension nominale applicable, pour des raisons de décomposition de l'eau, est limité à environ 1 V, ce qui nécessite pour atteindre des tensions classiques (par exemple, 12 V) de procéder à des agencements complexes de plusieurs unités de supercondensateur. De plus, la plage de températures accessible est limitée du fait de la faible solubilité de certains sels en milieu aqueux, ce qui ne permet pas d'utiliser ces électrolytes à des températures inférieures à -20°C.

Concernant les électrolytes organiques, ils présentent une fenêtre de stabilité électrochimique plus grande que les électrolytes aqueux et s'avèrent donc d'emblée plus intéressants pour une utilisation dans des supercondensateurs.

La demande de brevet JP2007311553A propose une solution électrolytique pour capacité électrique à double couche. Cette solution électrolytique comprend (i) un liquide ionique comprenant un cation contenant du phosphore et de l'azote et un anion et (ii) un composé phosphoré autre que le liquide ionique et éventuellement un solvant organique approtique et un électrolyte support.

La demande de brevet EP1577913A1 concerne des additifs pour solutions électrolytiques non aqueuses destinées à des capacités électriques double couche et comprenant un composé phosphazéne linéaire.

La demande internationale WO2017/069058A1 propose, aux paragraphes [0509] à [0520], des solutions électrolytique comportant un additif phosphazène, un sel LiPF₆, des solvants du type solvants carbonates et/ou éthers et d'autres additifs.

La demande de brevet EP2660920A2 a trait à des additifs pour solutions électrolytiques destinées à des batteries rechargeables au lithium. Les additifs décrits sont des phosphazène cycliques dont un des atomes de phosphore est substitué par un groupement amine.

La demande de brevet JP2009054884A concerne des électrolytes non aqueux utilisables dans des capacités double couche. La composition électrolytique illustrée à l'exemple 13 comprend un composé phosphazène, un composé 4-fluoro-1,3-dioxalan-2-one, un solvant mixte à base d'acétonitrile et d'un phosphazène cyclique comportant 5 atomes de fluor, du tétrafluoroborate de triéthylammonium et un liquide ionique.

Aussi, partant de ce constat, les inventeurs se sont fixé pour objectif de proposer des compositions, de préférence, non aqueuses utilisables comme électrolytes pour supercondensateurs et qui permettent une amélioration des propriétés de stockage de l'énergie et, plus particulièrement, une amélioration de la capacité même après un grand nombre de cycles de charge et de décharge.

### EXPOSÉ DE L'INVENTION

Les inventeurs ont pu combler l'objectif susmentionné en mettant au point une composition comprenant l'association d'un solvant organique spécifique et d'un additif organique spécifique.

Ainsi, l'invention a trait à un supercondensateur comprenant au moins une cellule comprenant deux électrodes de polarité opposée (respectivement une électrode positive et une électrode négative)à base de carbone activé entre lesquelles est disposée une composition électrolytique, de préférence non aqueuse, constituée exclusivement d'au moins un solvant nitrile, d'au moins un sel et d'au moins un additif de la famille des phosphazènes comprenant au moins un atome de fluor répondant à la formule (IV) telle définie ci-après.

Le ou les solvants nitriles sont des solvants comprenant au moins une fonction nitrile -CN et plus spécifiquement peuvent être :
- un solvant dinitrile (c'est-à-dire comprenant deux fonctions nitrile -CN), tel que l'adiponitrile ou le glutaronitrile ;
- un solvant mononitrile (c'est-à-dire comprenant une seule fonction nitrile -CN), tel qu'un solvant répondant à la formule (I) suivante :

   R¹-CN (I)

   dans laquelle R¹ représente un groupe alkyle comprenant de 1 à 5 atomes de carbone (ce qui couvre les groupes alkyles linéaires ou ramifiés) et dont un ou plusieurs atomes d'hydrogène peuvent être substitués par du fluor (auquel cas les groupes alkyles concernés pourront être qualifiés de groupes fluoroalkyles).

Un solvant nitrile particulièrement approprié dans le cadre de l'invention est l'acétonitrile de formule CH₃-CN (connu également sous l'abréviation ACN), ce solvant étant particulièrement avantageux car il est peu visqueux, dissout très bien les sels et est très dissociant.

De plus :
- il est très stable, tant dans des conditions oxydantes que réductrices ;
- il a un moment dipolaire, qui permet la solvatation des ions ; et
- il présente à la fois un nombre donneur élevé et un nombre accepteur élevé, ce qui fait qu'il peut se comporter à la fois comme un acide et une base de Lewis.

Quant au sel, il peut s'agir d'un sel de lithium, d'un sel de sodium, d'un sel de potassium ou encore d'un sel comprenant un cation comportant au moins un atome d'azote, dont la charge positive est portée par ledit atome d'azote (ce cation pouvant être qualifié de cation ammonium).

Concernant les sels de lithium, il peut être mentionné, sans être exhaustif, LiClO₄, LiBF₄, LiPF₆, le *bis*(trifluorométhanesulfonyl)imidure de lithium (connu sous l'abréviation LiTFSI), le *bis*(fluorosulfonyl)imidure de lithium (connu sous l'abréviation LiFSI), le *bis*(oxalato)borate de lithium (connu sous l'abréviation LiBOB), LiAlCl₄, LiSO₃CF₃ et les mélanges de ceux-ci.

Concernant les sels de sodium, il peut être mentionné, sans être exhaustif, NaClO₄, NaBF₄, NaPF₆, le *bis*(trifluorométhanesulfonyl)imidure de sodium, le *bis*(fluorosulfonyl)imidure de sodium, le *bis*(oxalato)borate de sodium, NaAlCl₄, NaSO₃CF₃, NaSCN et les mélanges de ceux-ci.

Concernant les sels de potassium, il peut être mentionné, sans être exhaustif, KClO₄, KBF₄, KPF₆, le *bis*(trifluorométhanesulfonyl)imidure de potassium, le *bis*(fluorosulfonyl)imidure de potassium, le *bis*(oxalato)borate de potassium, KAlCl₄, KSO₃CF₃, KSCN et les mélanges de ceux-ci.

Enfin, concernant les sels comprenant un cation comportant au moins un atome d'azote, celui-ci peut répondre à la formule générale (II) suivante : 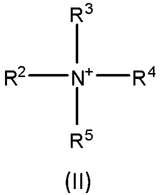 dans laquelle les R², R³, R⁴ et R⁵, identiques ou différents, représentent un groupe alkyle comprenant de 1 à 12 atomes de carbone.

A titre d'exemple de cations ammonium, il peut être cité le cation tétraéthylammonium (à savoir, un cation de formule (II) ci-dessus mentionnée avec R² à R⁵ représentant un groupe éthyle).

Le sel comprenant le type de cation mentionné ci-dessus comprend, en outre, un anion de sorte à neutraliser le cation, cet anion pouvant être un composé comprenant un hétéroatome porteur d'une charge négative, par exemple, choisi parmi un atome d'azote ou un atome de bore.

A titre d'exemple, il peut s'agir d'un composé borate perfluoré, tel qu'un composé tétrafluoroborate de formule (III) suivante :

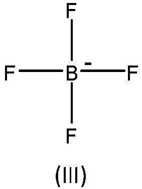

Un sel particulièrement avantageux est un sel résultant de l'association d'un cation de formule (II) susmentionnée et d'un anion borate perfluoré, tel que, par exemple, le tétrafluoroborate de tétraéthylammonium (connu également sous l'abréviation TEABF4).

Le ou les sels compris dans les compositions de l'invention peuvent être présents à une concentration allant de 0,1 mol/L à 2 mol/L.

En outre, les compositions de l'invention comprennent au moins un additif de la famille des phosphazènes comprenant au moins un atome de fluor.

On précise que, par phosphazènes, il est entendu des composés comprenant au moins un groupe comprenant un atome de phosphore pentavalent et un atome d'azote liés directement par une double liaison (soit, en d'autres termes un groupe -P=N-), ces composés pouvant être qualifiés également de composés iminophosphoranes ou composés imides de phosphine.

Dans l'invention, l'additif est un composé phosphazène comprenant un cycle incorporant trois groupes comprenant un atome de phosphore pentavalent et un atome d'azote liés directement par une double liaison, un tel composé répondant à la formule (IV) suivante : 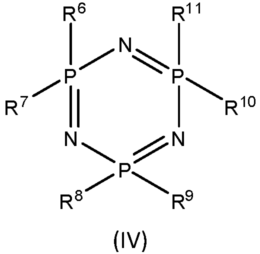 dans laquelle les R⁶ à R¹¹ représentent, indépendamment l'un de l'autre, un atome d'halogène (de préférence, un atome de fluor), un atome d'hydrogène, un groupe alkyle comprenant de 1 à 12 atomes de carbone ou un groupe isocyanate -NCO.

Un additif particulièrement avantageux dans le cadre de cette invention est un composé de formule (IV), dans lesquelles les R⁶ à R¹¹ représentent un atome de fluor, ce composé répondant ainsi à la formule (V) spécifique suivante : 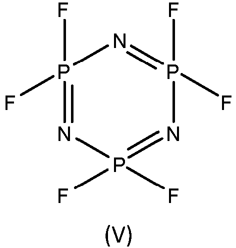 ce composé étant dénommé également hexafluorocyclotriphosphazène.

Ledit ou lesdits additifs peuvent être présents dans la composition à raison de 0,01 à 10%, de préférence, de 0,1% à 5% en masse par rapport à la masse totale de la composition.

Selon l'invention, les compositions électrolytiques sont constituées exclusivement d'au moins un solvant nitrile, d'au moins un sel et d'au moins un additif de la famille des phosphazènes comprenant au moins un atome de fluor de formule (IV).

Des compositions encore plus spécifiques et conformes à l'invention sont les compositions suivantes :
- une composition constituée exclusivement d'acétonitrile, un sel tétrafluoroborate de tétraéthylammonium (par exemple, à 1 mol/L) et un additif hexafluorocyclotriphosphazène à une teneur de 1% en masse par rapport à la masse totale de la composition ;
- une composition constituée exclusivement d'acétonitrile, un sel tétrafluoroborate de tétraéthylammonium (par exemple, à 1 mol/L) et un additif hexafluorocyclotriphosphazène à une teneur de 2% en masse par rapport à la masse totale de la composition ;
- une composition constituée exclusivement d'acétonitrile, un sel tétrafluoroborate de tétraéthylammonium (par exemple, à 1 mol/L) et un additif hexafluorocyclotriphosphazène à une teneur de 5% en masse par rapport à la masse totale de la composition ;
- une composition constituée exclusivement d'acétonitrile, un sel tétrafluoroborate de tétraéthylammonium (par exemple, à 1 mol/L) et un additif hexafluorocyclotriphosphazène à une teneur de 10% en masse par rapport à la masse totale de la composition.

Grâce à la combinaison des ingrédients constitutifs des compositions de l'invention, les inventeurs ont pu mettre en évidence une amélioration significative des performances des dispositifs de stockage d'énergie du type supercondensateur dans lesquelles les compositions de l'invention sont introduites comme électrolytes. Plus spécifiquement, lorsque les compositions sont introduites comme électrolytes dans un dispositif du type supercondensateur, il est possible d'obtenir une amélioration des capacités de décharge du supercondensateur notamment après 10000 cycles de test en cyclage galvanostatique et une amélioration des capacités notamment sur 30 cycles de test en voltampérométrie cyclique tout en améliorant la sécurité du dispositif, en particulier le caractère ininflammable au contact d'une flamme. Aussi, les compositions de l'invention constituent, avantageusement, des compositions électrolytiques.

Les deux électrodes de polarité sont, avantageusement, à base de carbone activé et peuvent être de composition identique.

Outre la présence de carbone activé, les électrodes peuvent comprendre un ou plusieurs liants organiques, qui vont contribuer à assurer la cohésion mécanique de ladite électrode.

Ces liants organiques peuvent être, en particulier, des liants polymériques comprenant un ou plusieurs polymères choisis parmi :
*les polymères fluorés, tels qu'un polytétrafluoroéthylène (connu sous l'abréviation PTFE), un polyfluorure de vinylidène (connu sous l'abréviation PVDF), un copolymère poly(fluorure de vinylidène-co-hexafluoropropène) (connu sous l'abréviation PVDF-HFP), un copolymère fluoré éthylène-propylène (connu sous l'abréviation FEP), un copolymère issu de la copolymérisation de tétrafluoroéthylène et du perfluoroalcoxyvinyléther (connu sous l'abréviation PFA) ;
*les polyimides;
*les polyacrylonitriles ;
*les polymères cellulosiques, tels qu'un carboxyméthylcellulose ; et
*les mélanges de ceux-ci.

Les électrodes peuvent comprendre, également, un additif carboné conducteur de l'électricité autre que du carbone activé, choisi parmi les noirs de carbone, les noirs d'acétylène, du graphite, les nanotubes de carbone, les fibres de carbone et les mélanges de ceux-ci, par exemple, les fibres de carbone obtenues en phase vapeur (connues sous l'abréviation VGCF).

Les électrodes peuvent être associées, chacune, à un collecteur de courant conducteur de l'électricité, ce collecteur de courant pouvant se présenter sous forme d'un feuillard métallique apposé sur l'une des faces desdites électrodes, ce feuillard métallique pouvant être un feuillard en aluminium.

Enfin, la composition électrolytique disposée entre les deux électrodes imprègne avantageusement un séparateur, qui sert de matrice d'imprégnation de la composition et permet son maintien entre les deux électrodes. Ce séparateur peut se présenter sous forme d'un film polymérique poreux monocouche ou multicouche revêtu ou non d'un composé apte à améliorer la mouillabilité de l'électrolyte ou peut se présenter sous forme d'un film poreux, par exemple, constitué d'un entrelacement de fibres en polyoléfine (par exemple, des fibres de polyéthylène) ou d'un entrelacement de fibres de verre.

Enfin, parmi les compositions électrolytiques susceptibles d'entrer dans la constitution des supercondensateurs de l'invention, certaines sont nouvelles et consistent en des compositions électrolytiques comprenant au moins un solvant nitrile, au moins un sel et comprenant, en outre, au moins un additif de la famille des phosphazènes comprenant au moins un atome de fluor, caractérisées en ce que le sel est un sel comprenant un cation comportant au moins un atome d'azote, dont la charge positive est portée par ledit atome d'azote. Cet aspect ne fait toutefois pas partie de l'invention objet des revendications annexées.

Les spécificités concernant le ou les solvants nitriles, le ou les additifs de la famille des phosphazènes comprenant au moins un atome de fluor, le sel comprenant un cation comportant au moins un atome d'azote, présentées dans la partie relative aux supercondensateurs, peuvent être reprises ici pour la description des nouvelles compositions.

L'invention va à présent être décrite en référence aux exemples fournis ci-dessous donnés à titre illustratif et non limitatif.

### EXPOSÉ DÉTAILLÉ DE MODES DE RÉALISATION PARTICULIERS

### EXEMPLE 1

Cet exemple illustre la préparation de différents électrolytes : un électrolyte non conforme à l'invention (Paragraphe a) ci-dessous) et quatre électrolytes conformes à l'invention (Paragraphes b) à e) ci-dessous).
a) Electrolyte non conforme à l'invention (dit Electrolyte E₀)
   L'électrolyte E₀ est préparé sous boîte à gants par dissolution de 1 mol/L de sel tétrafluoroborate de tétraéthylammonium dans un solvant acétonitrile (10 mL).
b) Electrolyte conforme à l'invention (dit Electrolyte E₁)
   L'électrolyte E₁ est préparé à partir de l'électrolyte E₀, auquel on ajoute de l'hexafluorocyclotriphosphazène (0,1511 g), moyennant quoi la teneur de l'hexafluorocyclotriphosphazène est de 1% en masse par rapport à la masse totale de l'électrolyte.
c) Electrolyte conforme à l'invention (dit Electrolyte E₂)
   L'électrolyte E₂ est préparé à partir de l'électrolyte E₀, auquel on ajoute de l'hexafluorocyclotriphosphazène (0,3053 g), moyennant quoi la teneur de l'hexafluorocyclotriphosphazène est de 2% en masse par rapport à la masse totale de l'électrolyte.
d) Electrolyte conforme à l'invention (dit Electrolyte E₃)
   L'électrolyte E₃ est préparé à partir de l'électrolyte E₀, auquel on ajoute de l'hexafluorocyclotriphosphazène (0,7873 g), moyennant quoi la teneur de l'hexafluorocyclotriphosphazène est de 5% en masse par rapport à la masse totale de l'électrolyte.
e) Electrolyte conforme à l'invention (dit Electrolyte E₄)
   L'électrolyte E₄ est préparé à partir de l'électrolyte E₀, auquel on ajoute de l'hexafluorocyclotriphosphazène (1,662 g), moyennant quoi la teneur de l'hexafluorocyclotriphosphazène est de 10% en masse par rapport à la masse totale de l'électrolyte.

### EXEMPLE 2

Cet exemple illustre la préparation d'un supercondensateur.

L'assemblage est réalisé en boîte à gants par superposition successive d'un couvercle inférieur en acier inoxydable doté d'un joint d'étanchéité en polypropylène, d'une cale en acier inoxydable, d'un disque d'électrode en carbone activé commercial JCK (le collecteur de courant, qui est une feuille en aluminium étant au contact de la cale en acier inoxydable et la face revêtue de carbone activé en partie supérieure), d'un séparateur en fibres de polyoléfines commercial Freudenberg imbibé de 150 µL d'électrolyte (à savoir, l'électrolyte E₀, E₁, E₂, E₃ et E₄), d'un disque d'électrode en carbone activé (la face revêtue de carbone activé étant au contact du séparateur et le collecteur de courant, qui est une feuille en aluminium en partie supérieure), d'une cale en acier inoxydable, d'un ressort et d'un couvercle supérieur en acier inoxydable.

L'ensemble est ensuite serti en boîte à gants.

### EXEMPLE 3

Dans cet exemple, il est procédé à des tests en voltampérométrie cyclique avec des supercondensateurs préparés conformément à l'exemple 2 avec respectivement l'électrolyte E₀ (non conforme à l'invention) et l'électrolyte E₁.

Ces tests consistent à faire subir aux supercondensateurs un balayage en tension à une vitesse de 100 mV/s entre 0 V et 2,7 V, répété trente fois à une température de 20°C. La mesure du courant durant ces balayages permet de calculer, à l'issue du test, la capacité spécifique d'une électrode en F/g.

Les résultats des capacités spécifiques en F/g sont reportés dans le tableau ci-dessous.

| | Electrolyte E₀ | Electrolyte E₁ |
|---|---|---|
| Cycle 1 | 112,3 | 123,4 |
| Cycle 10 | 110,3 | 124,2 |
| Cycle 20 | 110,4 | 124,3 |
| Cycle 30 | 110,5 | 124,1 |

Il apparaît clairement que l'électrolyte E₁ conforme à l'invention permet au supercondensateur, au travers de ce test de voltampéromètrie cyclique, de disposer d'une capacité améliorée de 12% (au trentième cycle) par rapport aux résultats obtenus avec l'électrolyte E₀ ne contenant aucun additif.

### EXEMPLE 4

Dans cet exemple, il est procédé à des tests en cyclage galvanostatique avec des supercondensateurs préparés conformément à l'exemple 2 avec respectivement l'électrolyte E₀ (non conforme à l'invention) et l'électrolyte E₁.

Ces tests consistent à imposer aux supercondensateurs une densité de courant de 1 A/g, à les charger alternativement jusqu'à 2,7 V puis les décharger jusqu'à 0 V (une charge suivie d'une décharge correspondant à un cycle), pour un nombre de 10000 cycles à une température de 20 °C. La mesure du temps de décharge de chaque cycle permet de calculer, à l'issue du test, la capacité du supercondensateur en F/g.

Les résultats des capacités en F/g sont reportés dans le tableau ci-dessous :

| | Electrolyte E₀ | Electrolyte E₁ |
|---|---|---|
| Cycle 1 | 32,8 | 33,3 |
| Cycle 500 | 31,3 | 31,8 |
| Cycle 1000 | 30,9 | 31,3 |
| Cycle 2000 | 30,3 | 30,7 |
| Cycle 3000 | 29,8 | 30,2 |
| Cycle 4000 | 29,2 | 29,6 |
| Cycle 5000 | 28,7 | 29,1 |
| Cycle 6000 | 28 | 28,5 |
| Cycle 7000 | 27,3 | 28,0 |
| Cycle 8000 | 26,7 | 27,5 |
| Cycle 9000 | 26,2 | 27,0 |
| Cycle 10000 | 25,8 | 26,6 |

Il apparaît clairement que l'électrolyte E₁ conforme à l'invention permet au supercondensateur, au travers de ce test de cyclage galvanostatique, de disposer d'une capacité améliorée de 3% (au 10000^{ème} cycle) par rapport aux résultats obtenus avec l'électrolyte E₀. De plus, au cours du cyclage, la diminution des capacités du supercondensateur contenant l'électrolyte E₁ est moins élevée, présageant ainsi d'une meilleure durée de vie en fonctionnement.

### EXEMPLE 5

Dans cet exemple, il est procédé à des tests d'inflammabilité des électrolytes, dont la préparation est exposée à l'exemple 1.

Pour ce faire, 1 mL d'électrolyte est déposé dans une coupelle en aluminium. L'électrolyte est étalé par agitation de façon à recouvrir entièrement le fond de la coupelle. Immédiatement après cette opération, une flamme est apportée au contact de l'électrolyte et un chronomètre permet de déterminer en combien de temps se produit l'auto-extinction de l'électrolyte, le début de la mesure du temps étant fixé dès qu'une flamme est visible et l'arrêt du chronomètre est opéré dès l'extinction de la flamme.

Les résultats des temps d'auto-extinction (en secondes) des électrolytes sont reportés dans le tableau ci-dessous.

| Electrolyte | Temps d'auto-extinction en secondes |
|---|---|
| E₀ | 29 |
| E₁ | 2 |
| E₂ | 0 |
| E₃ | 0 |
| E₄ | 0 |

Il apparaît clairement que l'ajout de l'additif de l'invention dans un électrolyte de type E₀ a un effet sécuritaire. Dès l'utilisation de 1% d'additif (Electrolyte E₁) la durée de combustion est réduite de 93% par comparaison avec un électrolyte ne contenant aucun additif (E₀). De plus, dès qu'une concentration supérieure ou égale à 2% d'additif est formulée dans un électrolyte de type E₀, aucune inflammation de l'électrolyte n'est observée au contact d'une flamme.

## Revendications

1. Supercondensateur comprenant au moins une cellule comprenant deux électrodes de polarité opposée (respectivement une électrode positive et une électrode négative) à base de carbone activé entre lesquelles est disposée une composition électrolytique constituée exclusivement d'au moins un solvant nitrile, d'au moins un sel et d'au moins un additif de la famille des phosphazènes comprenant au moins un atome de fluor répondant à la formule (IV) suivante : 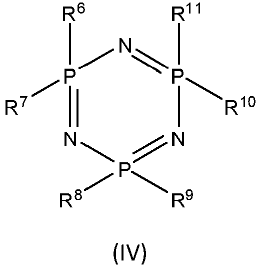 dans laquelle les R⁶ à R¹¹ représentent, indépendamment l'un de l'autre, un atome d'halogène, un atome d'hydrogène, un groupe alkyle comprenant de 1 à 12 atomes de carbone ou un groupe isocyanate -NCO.

2. Supercondensateur selon la revendication 1, dans lequel le au moins un solvant nitrile répond à la formule (I) suivante :
R¹-CN (I)
dans laquelle R¹ représente un groupe alkyle comprenant de 1 à 5 atomes de carbone et dont un ou plusieurs atomes d'hydrogène peuvent être substitués par du fluor.

3. Supercondensateur selon la revendication 1 ou 2, dans lequel le solvant nitrile est l'acétonitrile.

4. Supercondensateur selon l'une quelconque des revendications précédentes, dans lequel le sel est un sel de lithium, un sel de sodium, un sel de potassium ou un sel comprenant un cation comportant au moins un atome d'azote, dont la charge positive est portée par ledit atome d'azote.

5. Supercondensateur selon l'une quelconque des revendications précédentes, dans lequel le sel est un sel comprenant un cation comportant au moins un atome d'azote, dont la charge positive est portée par ledit atome d'azote.

6. Supercondensateur selon la revendication 5, dans lequel le cation répond à la formule (II) suivante : 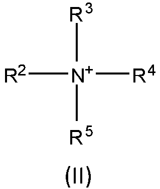 dans laquelle les R², R³, R⁴ et R⁵, identiques ou différents, représentent un groupe alkyle comprenant de 1 à 12 atomes de carbone.

7. Supercondensateur selon la revendication 5 ou 6, dans lequel le cation est un cation tétraéthylammonium.

8. Supercondensateur selon la revendication 5, dans lequel le sel comprend un anion, qui est un composé comprenant un hétéroatome porteur d'une charge négative, lequel hétéroatome est choisi parmi un atome d'azote ou un atome de bore.

9. Supercondensateur selon la revendication 8, dans lequel l'anion est un composé borate perfluoré.

10. Supercondensateur selon la revendication 8 ou 9, dans lequel l'anion est le composé tétrafluoroborate de formule (III) suivante :

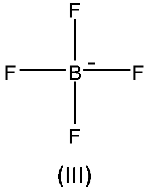

11. Supercondensateur selon l'une quelconque des revendications précédentes, dans lequel le sel est le tétrafluoroborate de tétraéthylammonium.

12. Supercondensateur selon l'une quelconque des revendications précédentes, dans lequel le ou les sels sont présents à une concentration allant de 0,1 mol/L à 2 mol/L.

13. Supercondensateur selon l'une quelconque des revendications précédentes, dans lequel l'additif est un composé phosphazène comprenant un cycle incorporant au moins un groupe comprenant un atome de phosphore pentavalent et un atome d'azote liés directement par une double liaison.

14. Supercondensateur selon l'une quelconque des revendications précédentes, dans lequel l'additif est un composé répondant à la formule (V) suivante :

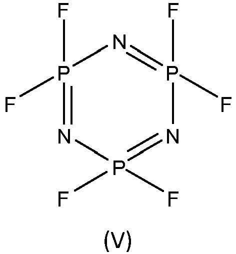

15. Supercondensateur selon l'une quelconque des revendications précédentes, dans lequel le ou les additifs sont présents à raison de 0,01 à 10%, en masse par rapport à la masse totale de la composition.

## Patentansprüche

1. Superkondensator, der mindestens eine Zelle umfasst, die zwei Elektroden mit entgegengesetzter Polarität (jeweils eine positive Elektrode und eine negative Elektrode) auf Aktivkohlebasis umfasst, zwischen denen eine Elektrolytzusammensetzung angeordnet ist, die ausschließlich aus mindestens einem Nitrillösungsmittel, mindestens einem Salz und mindestens einem Additiv der Phosphazenfamilie besteht, das mindestens ein Fluoratom umfasst, das folgender Formel (IV) entspricht: 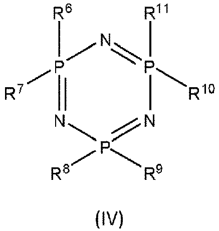 wobei die R⁶ bis R¹¹ unabhängig voneinander ein Halogenatom, ein Wasserstoffatom, eine 1 bis 12 Kohlenstoffatome umfassende Alkylgruppe oder eine -NCO-Isocyanatgruppe darstellen.

2. Superkondensator nach Anspruch 1, wobei das mindestens eine Nitrillösungsmittel folgender Formel (1) entspricht:
R¹-CN (I)
wobei R¹ eine 1 bis 5 Kohlenstoffatome umfassende Alkylgruppe darstellt und deren ein oder mehrere Wasserstoffatome durch Fluor substituiert werden können.

3. Superkondensator nach Anspruch 1 oder 2, wobei das Nitrillösungsmittel Acetonitril ist.

4. Superkondensator nach einem der vorhergehenden Ansprüche, wobei das Salz ein Lithiumsalz, ein Natriumsalz, ein Kaliumsalz oder ein Salz ist, das ein Kation mit mindestens einem Stickstoffatom umfasst, dessen positive Ladung von dem Stickstoffatom getragen wird.

5. Superkondensator nach einem der vorhergehenden Ansprüche, wobei das Salz ein Salz ist, das ein Kation mit mindestens einem Stickstoffatom umfasst, dessen positive Ladung von dem Stickstoffatom getragen wird.

6. Superkondensator nach Anspruch 5, wobei das Kation folgender Formel (II) entspricht: 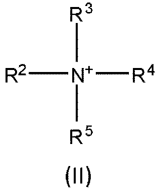 wobei die R², R³, R⁴ und R⁵, gleich oder unterschiedlich, eine 1 bis 12 Kohlenstoffatome umfassende Alkylgruppe darstellen.

7. Superkondensator nach Anspruch 5 oder 6, wobei das Kation ein Tetraethylammoniumkation ist.

8. Superkondensator nach Anspruch 5, wobei das Salz ein Anion umfasst, das eine Verbindung ist, die ein Heteroatom umfasst, das eine negative Ladung trägt, wobei das Heteroatom aus einem Stickstoffatom oder einem Boratom ausgewählt ist.

9. Superkondensator nach Anspruch 8, wobei das Anion eine perfluorierte Boratverbindung ist.

10. Superkondensator nach Anspruch 8 oder 9, wobei das Anion die Tetrafluorboratverbindung mit folgender Formel (III) ist:

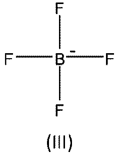

11. Superkondensator nach einem der vorhergehenden Ansprüche, wobei das Salz Tetraethylammoniumtetrafluorborat ist.

12. Superkondensator nach einem der vorhergehenden Ansprüche, wobei das oder die Salze in einer Konzentration von 0,1 mol/L bis 2 mol/L vorhanden sind.

13. Superkondensator nach einem der vorhergehenden Ansprüche, wobei das Additiv eine Phosphazenverbindung ist, die einen Kreislauf umfasst, der mindestens eine Gruppe umfasst, die ein fünfwertiges Phosphoratom und ein Stickstoffatom umfasst, die direkt durch eine Doppelbindung verbunden sind.

14. Superkondensator nach einem der vorhergehenden Ansprüche, wobei das Additiv eine Verbindung ist, die folgender Formel (V) entspricht:

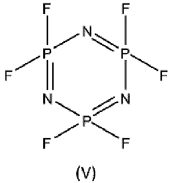

15. Superkondensator nach einem der vorhergehenden Ansprüche, wobei das/die Additiv(e) in einem Massenanteil von 0,01 bis 10 % bezogen auf die Gesamtmasse der Zusammensetzung vorhanden ist/sind.

## Claims

1. Supercapacitor comprising at least one cell comprising two electrodes of opposite polarity (respectively a positive electrode and a negative electrode) based on activated carbon between which is disposed an electrolyte composition, consisting exclusively of at least one nitrile solvent, of at least one salt and of at least one additive from the family of phosphazenes comprising at least one fluorine atom having the following formula (IV): 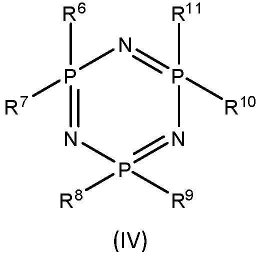 in which R⁶ to R¹¹ represent, independently of each other, a halogen atom, a hydrogen atom, an alkyl group comprising from 1 to 12 carbon atoms or an isocyanate group -NCO.

2. Supercapacitor according to claim 1, wherein the at least one nitrile solvent has the following formula (I):
R¹-CN (I)
in which R¹ represents an alkyl group comprising from 1 to 5 carbon atoms and one or more hydrogen atoms of which can be substituted with fluorine.

3. Supercapacitor according to claim 1 or 2, wherein the nitrile solvent is acetonitrile.

4. Supercapacitor according to any of the preceding claims, wherein the salt is a lithium salt, a sodium salt, a potassium salt or a salt comprising a cation including at least one nitrogen atom, the positive charge of which is carried by said nitrogen atom.

5. Supercapacitor according to any of the preceding claims, wherein the salt is a salt comprising a cation including at least one nitrogen atom, the positive charge of which is carried by said nitrogen atom.

6. Supercapacitor according to claim 5, wherein the cation has the following formula (II): 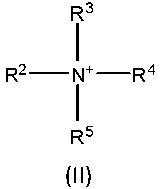 in which R², R³, R⁴ and R⁵, identical or different from each other, represent an alkyl group comprising from 1 to 12 carbon atoms.

7. Supercapacitor according to claim 5 or 6, wherein the cation is a tetraethylammonium cation.

8. Supercapacitor according to claim 5, wherein the salt comprises an anion, which is a compound comprising a heteroatom carrying a negative charge, which heteroatom is chosen from a nitrogen atom or a boron atom.

9. Supercapacitor according to claim 8, wherein the anion is a perfluorinated borate compound.

10. Supercapacitor according to claim 8 or 9, wherein the anion is the tetrafluoroborate compound of the following formula (III):

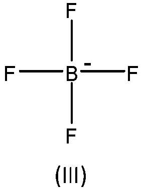

11. Supercapacitor according to any of the preceding claims, wherein the salt is tetraethylammonium tetrafluoroborate.

12. Supercapacitor according to any of the preceding claims, wherein the salt(s) is/are present at a concentration ranging from 0.1 mol/L to 2 mol/L.

13. Supercapacitor according to any of the preceding claims, wherein the additive is a phosphazene compound comprising a ring incorporating at least one group comprising a pentavalent phosphorous atom and a nitrogen atom which are directly bonded through a double bond.

14. Supercapacitor according to any of the preceding claims, wherein the additive is a compound having the following formula (V):

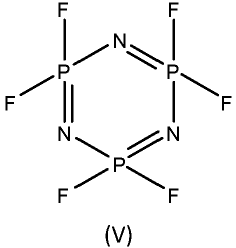

15. Supercapacitor according to any of the preceding claims, wherein the additive(s) is/are present in an amount from 0.01 to 10 mass%, relative to the total mass of the composition.
